# EUROPÄISCHE PATENTSCHRIFT

(11) **EP 2 742 650 B1**
(45) Veröffentlichungstag und Bekanntmachung des Hinweises auf die Patenterteilung: **25.12.2019**
(21) Anmeldenummer: 12766388.8
(22) Anmeldetag: 07.08.2012
(51) Int. Cl.: H04L 12/28, G05B 15/02, H04L 29/08

(54) **NUTZER-ZUSTAND UND -VERHALTEN BASIERTES STEUERUNGSSYSTEM UND -VERFAHREN FÜR GEBÄUDETECHNISCHE SYSTEME UND KOMPONENTEN**
USER STATUS- AND USER BEHAVIOR-BASED CONTROL SYSTEM AND METHOD FOR BUILDING-INSTALLATION SYSTEMS AND COMPONENTS
SYSTÈME ET PROCÉDÉ DE COMMANDE BASÉ SUR LA POSITION D'UN UTILISATEUR ET UN PROCÉDÉ D'UTILISATEUR POUR DES SYSTÈMES ET COMPOSANTS TECHNIQUES DE BÂTIMENT

(30) Priorität: 08.08.2011 DE 102011052467
(43) Veröffentlichungstag der Anmeldung: 18.06.2014
(73) Patentinhaber: Tado GmbH, 80637 München (DE)
(72) Erfinder: DEILMANN, Christian, 80805 München (DE); SCHWARZ, Johannes, 81669 München (DE)
(74) Vertreter: Ridderbusch, Oliver
(86) Internationale Anmeldenummer: PCT/EP2012/065407
(87) Internationale Veröffentlichungsnummer: WO 2013/020970

(56) Entgegenhaltungen:
- EP-A1- 1 115 263
- WO-A1-00/39964
- US-A1- 2004 163 073
- US-A1- 2007 233 285
- US-A1- 2009 054 028
- US-A1- 2010 286 937
- US-A1- 2011 153 107
- US-B1- 6 906 617

## Beschreibung

### GEBIET DER ERFINDUNG

Die vorliegende Offenbarung betrifft ein gebäudetechnisches Steuerungssystem, wie es zum Beispiel bei der Automatisierung von Gebäuden und/oder bei der Steuerung von in einem Gebäude vorgesehenen Energieerzeugungs-, Energiespeicher- und Energiewandlungseinrichtungen Verwendung findet. Insbesondere betrifft die vorliegende Erfindung ein gebäudetechnisches Steuerungssystem und ein Verfahren zu dessen Betrieb, bei dem ein Zustand bzw. ein Verhalten der Gebäudenutzer bestimmt und bei der Steuerung von gebäudetechnischen Komponenten berücksichtigt wird.

### HINTERGRUND DER ERFINDUNG

Die Aufgabenbereiche gebäudetechnischer Steuerungssysteme werden auf immer mehr Bereiche ausgedehnt. Üblicherweise umfassen gebäudetechnische Steuerungssysteme klimatechnische Steuerungssysteme für Heiz- und Kühlaufgaben in Gebäuden, bei denen das Regeln einer Raumtemperatur im Mittelpunkt steht. Heiz- und Kühlsysteme für Gebäude werden allgemein auch als HVAC-Systeme ("Heating, Ventilating and Air Conditioning") oder als HKL-Systeme ("Heizung, Lüftung, Klimatechnik") bezeichnet. Sofern im Folgenden von HVAC-Steuerungssystemen oder HKL-Steuerungssystemen die Rede ist, bezeichnen diese Steuerungssysteme für klimatechnische Heiz- und Kühlaufgaben in Gebäuden.

Weitere Aufgaben gebäudetechnischer Steuerungssysteme umfassen zum Beispiel das Betätigen automatischer Sonnenschutzmaßnahmen, wie etwa Rollos, in Abhängigkeit einer über ein Sensorsystem bestimmten Sonneneinstrahlung oder das Überwachen und Steuern des Schließzustandes von Fenstern und Türen.

Gebäude im Sinne dieser Anmeldung umfassen auch Gebäudeabschnitte und beliebige Arten von Wohnumgebungen, wie zum Beispiel Apartments oder Räume.

Im Stand der Technik sind verschiedene Systeme bekannt, die eine Fernsteuerung von Geräten in einem Gebäude unter anderem auch der in einem Gebäude installierten HVAC-Systeme zum Ziel haben. So ist beispielsweise ein an das Internet anbindbares Steuerungssystem für Geräte in Wohnumgebungen unter der Produktbezeichnung "MAX!" über das Elektronik-Versandhaus "ELV Elektronik AG" aus Leer in Deutschland erhältlich. Das System erlaubt einem Nutzer das Steuern von unterschiedlichen Geräten in einer Wohnumgebung über das Internet. Das System umfasst ein Schnittstellengerät (MAX! Cube), das über eine Ethernet-Schnittstelle mit einem in der Wohnumgebung vorhandenen Router verbunden wird. Der Router stellt dem Schnittstellengerät eine Verbindung mit dem Internet bereit. Über diese Internetverbindung wird das Schnittstellengerät (MAX! Cube) an ein Internet-Serversystem (MAX! Portal) angebunden, auf das von beliebigen internetfähigen Endgeräten wie einem Computer oder einem Smartphone zugegriffen werden kann. Der Zugriff erfolgt in der Regel über einen auf dem internetfähigen Endgerät vorgesehenen Internet-Browser. An das Schnittstellengerät (MAX! Cube) können mehrere Geräte, wie z.B. Aktoren oder Sensoren, über eine bidirektionale Funkschnittstelle angebunden werden. Insbesondere ist vorgesehen fernbetätigbare motorgetriebene Heizkörperthermostat-Ventilsteller, Fensterkontaktsensoren und Taster über die Funkschnittstelle anzubinden. Durch Anbringen kompatibler fernbetätigbarer Heizkörperthermostat-Ventilsteller in verschiedenen Räumen wird es einem Nutzer ermöglicht über ein Webinterface die Heizungen in den Einzelräumen gezielt zu steuern. So kann der Nutzer die Heizung wahlweise in einem ersten Raum an und in einem zweiten Raum ausschalten, ohne an dem jeweiligen Ort sein zu müssen. Des weiteren ist das Schnittstellengerät (MAX! Cube) geeignet, sämtliche Konfigurationsdaten zu speichern und unabhängig von einer Internetverbindung zu arbeiten. Der Regelbetrieb ist auch ohne PC oder Internet möglich.

Aus der US 2010/0127854 ist weiterhin ein Hausautomatisierungs-/Heimautomationssystem und ein Verfahren zur automatischen Steuerung eines Haushaltsgerätes auf der Basis von Geopositionsdaten eines Gebäudenutzers bekannt. Die Geopositionsdaten eines Gebäudenutzers, wie etwa die mittels eines GPS-Geräts ermittelten Geschwindigkeits- sowie die Längen- und Breitengradinformationen des Gebäudenutzers, werden von dem Heimautomationssystem verwendet, um eine geschätzte Ankunftszeit des Gebäudenutzers zu bestimmen und darauf basierend einen Schaltbefehl an ein Haushaltsgerät zu senden.

Aus der AT 413 059 B ist eine Einrichtung für die Kontrolle und Steuerung der Haustechnik bekannt. Sie erlaubt die Optimierung eines Raumklimas mit dem Ziel der Minimierung des Energiebedarfs durch eine raumnutzungsabhängige Steuerung. Weitere Systeme mit Bezug zu Hausautomatisierungen sind bekannt aus: DE 102009040090 A1, US 020070233285 A1, DE 102009044161 A1, EP 2012468 A2, DE 102009050170 A1, US 20110153107 A1 und WO 2011065775 A2. US 2007/233285 A1 beschreibt ein System zur automatischen Steuerung von Hausgeräten, beispielsweise einer Klimaanlage, abhängig von einer Nutzeraktivität. Zur Überwachung der Nutzeraktivität wird ein Sensor verwendet. Der Sensor kann ein vom Nutzer betätigtes Gerät (z.B. ein Fernseher) sein, außerdem kann als Sensor ein den Nutzer erkennendes Gerät (z.B. ein Türsensor oder eine Videokamera) verwendet werden. WO 2000/39964 A1 beschreibt ein Hausautomatisierungssystem, welches die Position eines Nutzers erfasst und abhängig von der Position Geräte steuert. US20110153107A1 beschreibt ein System, bei dem ein SmartMeter den Stromverbrauch einer Gruppe an elektrischen Geräten erfasst. Übersteigt der gemessene Stromverbrauch einen Schwellwert, werden eines oder mehrere der elektrischen Geräte dieser Gruppe abgeschaltet.

Die US 2010/0286937 A1 beschreibt ein System zur Steigerung der Energieeffizienz eines Haushalts. Hierbei wird der Energieverbrauch von Geräten des Haushalts in Echtzeit überwacht, insbesondere auch der zentrale Stromverbrauchsverlauf des Gebäudes. Geräte können dann zeitlich gesteuert werden, um den Stromverbrauch und/oder Stromkosten zu reduzieren.

Die US 2010/0161149 beschreibt ebenfalls ein System, bei dem ein energieverbrauchendes Gerät basierend auf den Geopositionsdaten eines Gebäudenutzers und einer daraus errechneten geschätzten Ankunftszeit des Gebäudenutzers geschaltet wird. In der Schaltlogik werden zusätzlich weitere Faktoren berücksichtigt. Insbesondere wird ein bisheriges Leistungsverhalten des energieverbrauchenden Gerätes unter verschiedenen Rahmenbedingungen berücksichtigt, um zu erreichen, dass das energieverbrauchende Gerät bei Eintreffen des Gebäudenutzers bereits einen stationären Betriebszustand erreicht hat. So kann zum Beispiel eine Heizung, um deren Trägheitsverhalten bei verschiedenen Außentemperaturen zu berücksichtigen, in Abhängigkeit von der Außentemperatur und der Kenntnis des früheren Leistungsverhaltens bei dieser Außentemperatur ggf. früher oder später eingeschaltet werden.

Die aus dem Stand der Technik bekannten gebäudetechnischen Steuerungssysteme berücksichtigen bei der Lösung der jeweiligen Steuerungsaufgabe einen Zustand eines Gebäudenutzers bisher aber nur unzureichend und sind daher nur sehr begrenzt geeignet, eine auf einen Gebäudenutzerzustand abgestimmte Steuerung von gebäudetechnischen Komponenten zu realisieren. Gebäudenutzerzustände im Sinne dieser Offenbarung sind zum Beispiel "sport treiben", "unterwegs", "zuhause", "am Schreibtisch arbeiten", "schlafen", "fernsehen" und "kochen". Beispielsweise ist es den aus dem Stand der Technik bekannten Systemen nicht möglich festzustellen, ob ein Nutzer schläft oder Sport treibt und daraus eine daraufhin abgestimmte Steuerungsvorgabe des gebäudetechnischen Steuerungssystems abzuleiten.

Des Weiteren berücksichtigen die aus dem Stand der Technik bekannten System nicht, dass Geopositionsdaten nicht immer zur Verfügung stehen und auch fehlerbehaftet sein können. In der Regel werden die Geopositionsdaten über ein Mobilfunkgerät oder vergleichbares tragbares Gerät erfasst und an ein gebäudetechnisches Steuerungssystem übermittelt. Ein solches Gerät muss der Gebäudenutzer zur ordnungsgemäßen Funktion mit sich führen. Daraus folgt, dass die von dem Mobiltelefon bzw. von dem tragbaren Gerät übermittelten oder über die das Mobilfunknetz anhand einer Mobilfunkzellennummer bestimmbaren Geopositionsdaten unrichtig sein können. Dies ist zum Beispiel dann der Fall, wenn ein Gebäudenutzer sein Mobiltelefon an einem Ort vergessen hat, oder es bewusst nicht mit sich führt, da er zum Beispiel nicht durch Telefonate gestört werden möchte. Sofern ein Gebäudenutzer sein Mobiltelefon ausschaltet, stehen ebenfalls keine Geopositionsdaten zur Verfügung.

Eine weitere Grenze der Steuerung auf der Basis von Geopositionsdaten ergibt sich daraus, dass nicht immer auf Geopositionsdaten eines Gebäudenutzers zugegriffen werden kann, da ein Gebäudenutzer zum Beispiel aus Datenschutzgründen nicht möchte, dass die Geopositionsdaten seines Mobiltelefons entweder über seinen Mobilfunknetzbetreiber oder über ein auf seinem Mobiltelefon vorgesehene Schnittstelle zugänglich gemacht werden.

### DARSTELLUNG DER ERFINDUNG

Vor diesem Hintergrund ist es daher die Aufgabe der Erfindung, ein gebäudetechnisches Steuerungssystem und ein Verfahren zu dessen Betrieb sowie ein Verfahren zur Steuerung einer gebäudetechnischen Komponente anzugeben, welches einen Zustand eines Gebäudenutzers effizient bestimmt und bei der Lösung der für eine gebäudetechnische Funktionseinheit spezifischen Steuerungsaufgabe berücksichtigt.

Diese Aufgabe wird durch die Merkmale der Patentansprüche 1 und 9 gelöst und durch die Maßnahmen der untergeordneten Patentansprüche in vorteilhafter Weise weitergebildet.

Eine auf einen Gebäudenutzerzustand abgestimmte Steuerung gebäudetechnischer Komponenten führt zum einen zu einem höheren Komfort der Gebäudenutzer und zum anderen wird auch eine Energieeinsparung erreicht, wenn eine gebäudetechnische Komponente nur dann, wenn sie überhaupt benötigt wird, und auch nur mit der Leistung betrieben wird, die für den gegenwärtigen Gebäudenutzerzustand tatsächlich benötigt wird.

Das erfindungsgemäße Steuerungssystem sieht vor aus einer einzigen oder einer Vielzahl von Informationsquellen auf einen Gebäudenutzerzustand zu schließen, um diesen zur Bestimmung einer auf einen aktuellen/gegenwärtigen Gebäudenutzerzustand angepassten Steuerungsvorgabe für eine gebäudetechnische Funktionseinheit zu nutzen.

Dazu wird ein gebäudetechnisches Steuerungssystem vorgeschlagen, bei dem eine Nutzerzustands-Bestimmungseinrichtung eine Stromverbrauchserfassungseinrichtung, die mit einem sog. intelligenten-Stromzähler (SmartMeter) gekoppelt ist, umfasst und vorzugsweise mindestens eine oder mehrere der folgenden Einrichtungen umfasst: eine Gebäudenutzer-Geodatenerfassungseinrichtung, eine Gerätverwendungserfassungseinrichtung, eine Funkfrequenzüberwachungseinrichtung, eine Geräuscherfassungseinrichtung, eine Lichtsensoreinrichtungund/oder eine Bewegungsmeldereinrichtung.

Gemäß der Erfindung ist vorgesehen, eine Stromverbrauchserfassungs- bzw. Stromverbrauchsmesseinrichtung zur Bestimmung eines aktuellen Gebäudenutzerzustands einzusetzen. So wird aus dem zentralen Stromverbrauch eines Gebäudes bzw. Gebäudeabschnitts auf ein Verhalten bzw. einen Zustand des Gebäudenutzers rückgeschlossen, da der Stromverbrauch in Abhängigkeit einer Tätigkeit, die in Verbindung mit der Nutzung eines elektrischen Verbrauchers im Gebäude steht, eines Gebäudenutzers bestimmte charakteristische Werte bzw. Verläufe aufweist. So ist der Stromverbrauch eines Fernsehers deutlich von dem einer Waschmaschine oder eines Kühlschranks unterscheidbar. Weiterhin weist der Stromverbrauch zum Beispiel einen für das Gebäude oder einen Gebäudeabschnitt charakteristischen besonders geringen Wert auf, wenn ein Gebäudenutzer schläft, da dann in der Regel eine minimale Anzahl von elektrischen Verbrauchern im Gebäude bzw. Gebäudeabschnitt betrieben werden.

Gemäß einer weiteren vorzugsweisen Ausführungsform der Erfindung ist vorgesehen, eine Gebäudenutzer-Geodatenerfassungseinrichtung einzusetzen, um durch Vergleich eines Geopositionsdatensatzes eines Gebäudes und eines Geopositionsdatensatzes eines Gebäudenutzers zu bestimmen, ob der Gebäudenutzer innerhalb einer um das Gebäude definierten Geozone befindet oder nicht. Die Information ob sich der Gebäudenutzer in der um das Gebäude definierten Geozone befindet wird von dem gebäudetechnischen Steuerungssystem verwendet, um eine gebäudetechnische Komponente zielgerichtet zu steuern. So kann am Beispiel eines HVAC-Systems eine höhere Leistung gefahren werden, wenn der Gebäudenutzer "zuhause" ist und wenn der Gebäudenutzer als "abwesend" gilt, sich also außerhalb der Geozone aufhält, mit einer niedrigeren Leistung gefahren werden.

Gemäß einer weiteren vorzugsweisen Ausführungsform der Erfindung ist vorgesehen, das gebäudetechnische Steuerungssystem mit einer Gerätverwendungseinrichtung auszustatten. Eine Gerätverwendungseinrichtung ist ausgebildet, mit einer Meldeeinrichtung in einem von einem Gebäudenutzer verwendeten Gerät, wie einem Computer, einem Sportgerät, einem Haushaltsgerät, oder einem beliebigen anderen Gerät zu koppeln. Die Gerätverwendungseinrichtung empfängt von der Meldeeinrichtung Nachrichten, die Informationen über die Verwendung des Gerätes enthalten. Das gebäudetechnische Steuerungssystem erhält so Information über die Verwendung des Gerätes und kann daraus eine auf das Verhalten bzw. den Zustand des Gebäudenutzers angepasste Steuerungsvorgabe für eine gebäudetechnische Komponente ableiten.

Gemäß einer weiteren Ausführungsform der Erfindung ist vorgesehen, das gebäudetechnische Steuerungssystem mit einer Funkfrequenzüberwachungseinrichtung auszustatten. Eine Funkfrequenzüberwachungseinrichtung überwacht Funkfrequenzbänder auf bestimmte Charakteristiken, die im Leistungsspektrum der Funkfrequenzbänder detektierbar sind. Sofern bestimmte Charakteristiken erkannt werden, meldet die Funkfrequenzüberwachungseinrichtung dies an die Nutzerzustands-Bestimmungseinrichtung. In der Regel kann aus dem Detektieren der Charakteristiken auf die Anwesenheit eines Gebäudenutzers im Gebäude geschlossen werden und darauf basierend eine geeignete Steuerungsvorgabe für eine gebäudetechnische Funktionseinheit abgeleitet werden.

Eine Weiterbildung des erfindungsgemäßen Steuerungssystems sieht vor eine statistische Auswertung von in der Vergangenheit bestimmtem Nutzerzuständen eines Gebäudenutzers vorzunehmen und daraus ein für den Gebäudenutzer typisches Nutzerverhaltenszeitprofil abzuleiten, das ausschließlich oder in Abstimmung mit einem gegenwärtig bestimmten Nutzerzustand zur Steuerung des Betriebs der gebäudetechnischen Funktionseinheit verwendet wird. Ein solches Nutzerverhaltenszeitprofil ist besonders dann vorteilhaft, wenn die aktuell bzw. gegenwärtig bestimmten Nutzerzustände fehlerbehaftet sein können, wie dies eingangs am Beispiel der Geopositionsdatenerfassung eines Gebäudenutzers beschrieben wurde.

Gemäß einer Ausführungsform der Erfindung ist im Zusammenhang mit gebäudebasierter Energieerzeugung vorgesehen, auch energieerzeugende Gebäudekomponenten, wie z.B. eine Blockheizkraft-, Photovoltaik-, Solarthermie-, Wärmepumpen-, Biogas-, Wind- und Wasserkraftanlage, auf der Basis eines Gebäudenutzerzustands zu steuern. So können zugehörige Energiespeicher je nach Gebäudenutzerverhalten ge- oder entladen werden. So kann zum Beispiel bei der Abwesenheit eines Gebäudenutzers ein im Gebäude befindlicher Energiespeicher entladen werden, um Energie über ein Versorgungsnetz, wie zum Beispiel ein Stromnetz, anderen an das Versorgungsnetz angeschlossenen Teilnehmern, wie etwa Haushalten, zur Verfügung zu stellen. Bei Anwesenheit des Gebäudenutzers dagegen findet keine oder nur eine ggf. verringerte Entladung des Energiespeichers statt, da die Energie von dem Gebäudenutzer selbst benötigt werden könnte. In einem Mehrbenutzerszenario, bei dem einem Gebäude bzw. Gebäudeabschnitt mehrere Gebäudenutzer zugeordnet sind, ist auch denkbar den Grad eines Entladens des Energiespeichers von der Anzahl der Anwesenden Gebäudenutzer abhängig zu machen. Am Beispiel eines Zweipersonenhaushalts, ist der Energiebedarf des Haushalts bei Anwesenheit beider Personen selbstverständlich höher als bei Anwesenheit nur einer Person. Mögliche Energiespeicher umfassen, ohne Einschränkung auf die genannten Beispiele, Akkumulatoren, Wärmespeicher-, Pumpspeicher- und Schwungradsysteme.

Folglich können gebäudetechnische Systeme im Sinne der vorliegenden Erfindung insbesondere auch Steuerungssysteme für Energieerzeugungs-, Energiespeicher- und Energiewandlungseinrichtungen umfassen, wie sie insbesondere bei Gebäuden zum Einsatz kommen, die mit Systemen zur Nutzung erneuerbarer/regenerativer Energien ausgestattet sind. Beispiele für Systeme zur Nutzung erneuerbarer/regenerativer Energien umfassen, ohne Einschränkung auf die hier genannten, Photovoltaik-, Solarthermie-, Windkraft-, Wasserkraft-, Geothermie- und Bioenergieanlagen sowie daran angeschlossene Energiespeicher- und Energiewandlungseinrichtungen.

Als Energiespeichereinrichtung kann insbesondere auch eine Batterie bzw. ein Akkumulator eines Elektrofahrzeugs, wie etwa ein Elektroauto, in Betracht kommen. Ein von dem erfindungsgemäßen gebäudetechnischen Steuerungssystem ermittelter Gebäudenutzerzustand kann dazu verwendet werden, die Energiespeichereinrichtung des Elektrofahrzeugs in Abhängigkeit von dem Gebäudenutzerzustand zu laden oder entladen. So kann zum Beispiel bei Abwesenheit des oder der Gebäudenutzer Energie aus dem Energiespeicher des Elektrofahrzeugs entnommen und bei sich abzeichnender Rückkehr des Gebäudenutzers zum Gebäude wieder zurückgeführt werden.

Insbesondere umfasst die Erfindung ein gebäudetechnisches Steuerungssystem, bei dem die gebäudetechnische Funktionseinheit ein Heiz- oder Kühlsystem, ein Wärmetauscher, ein Heizkörper, ein Heizkörper-Thermostatventil, ein Warmwasserbereitungssystem, ein Ventilator, ein Klimagerät, ein intelligentes Glas (elektrochrome Verglasung / steuerbares Tageslichtsystem), dessen Lichtdurchlässigkeit durch das Anlegen einer elektrischen Spannung verändert werden kann, ein Haushaltsgerät oder ein sonstiges energieverbrauchendes Gerät ist.

Die Erfindung umfasst auch ein Verfahren zum Betrieb eines gebäudetechnischen Steuerungssystems und/oder zur Steuerung einer gebäudetechnischen Funktionseinheit, wobei die folgenden Schritte von dem Verfahren umfasst sind: Bestimmen eines aktuellen Gebäudenutzerzustands und Verwenden des bestimmten Gebäudenutzerzustands zur Bestimmung einer Steuerungsvorgabe für eine gebäudetechnische Funktionseinheit, wobei die gebäudetechnische Funktionseinheit eine physikalische Größe des Gebäudes steuert, deren Steuerungsverhalten eine Trägheit aufweist, die sich durch ein verzögertes Erreichen eines Vorgabezustands auf einen Schaltbefehl hin äußert, weiterhin mit dem Schritt des Ermittelns eines zu erwartenden Gebäudenutzerzustands aus statistischen Daten und/oder aus Angaben eines Gebäudenutzers; wobei das Verwenden des bestimmten Gebäudenutzerzustands weiterhin ein Abgleichen des erwarteten Gebäudenutzerzustands mit dem bestimmten Gebäudenutzerzustand umfasst.

Gemäß einem weiteren Aspekt wird ein gebäudetechnisches Steuerungssystem offenbart, insbesondere für HVAC-Systeme, bei dem eine Internet-Witterungsdatenschnittstelle vorgesehen ist, um Witterungsdaten und Wettervorhersagen aus dem Internet zur Steuerung des Betriebs der gebäudetechnischen Funktionseinheit zu berücksichtigen.

Gemäß einem anderen weiteren Aspekt wird ein gebäudetechnisches Steuerungssystem offenbart, bei dem das gebäudetechnische Steuerungssystem eine Nachrüsteinheit für ein zentrales Heizungsthermostat umfasst, die mit einem in einem Gebäude installierten Heizungsthermostat koppelbar ist, wobei die Nachrüsteinheit eine Umschalteinheit umfasst, die zwischen einer ersten Betriebsart und einer zweiten Betriebsart umschalten kann. Die erste Betriebsart umfasst ein Steuern der Heizungsanlage durch die Nachrüsteinheit. Die zweite Betriebsart umfasst eine Steuern der Heizungsanlage durch das ursprünglich installierte Heizungsthermostat. Vorzugsweise ist die Nachrüsteinheit mit einer Zentraleinheit koppelbar, über die Steuerungsbefehle an die Nachrüsteinheit gesendet und Nachrichten von der Nachrüsteinheit empfangen werden können. Gemäß einer vorzugsweisen Ausbildung der Kopplung der Nachrüsteinheit mit dem ursprünglich vorhandenen Heizungsthermostat können Steuerungsvorgaben und/oder Zustände des ursprünglichen Heizungsthermostats von der Nachrüsteinheit aufgenommen bzw. abgefühlt werden.

Gemäß einem anderen weiteren Aspekt wird ein gebäudetechnisches Steuerungssystem offenbart, bei dem eine Energieversorgung über die in einem Gebäude installierten Heizungsrohre erfolgt. Es umfasst eine Energie-Einspeiseeinrichtung, die an ein Heizungsrohrleitungssystem koppelbar ist und ausgebildet ist, eine Energiemenge in Form eines hochfrequenten Signals in das Rohrleitungssystem einzubringen, wobei das Rohrleitungssystem als Einzelleiter fungiert. Vorzugsweise umfasst das gebäudetechnische Steuerungssystem weiterhin mindestens eine gebäudetechnische Komponente in Gestalt eines elektrischen Heizkörperthermostatstellers, der an das Rohrleitungssystem anbindbar ist und ausgebildet ist, die von der Energie-Einspeiseeinrichtung in das Rohrleitungssystem eingebrachte elektrische Energie zurück in elektrische Energie zu wandeln. Der Vorteil dieser Ausführungsform im Zusammenhang mit einem gebäudetechnischen Steuerungssystem für ein Heizungssystem beruht darin, dass keine zusätzlichen elektrischen Leiter zu den einzelnen Heizkörpern verlegt werden müssen, kein Batteriewechsel stattfinden muss und auf teure Energie-Harvester Module verzichtet werden kann.

### KURZE BESCHREIBUNG DER ZEICHNUNGEN

Die Erfindung wird anhand der beigefügten Figuren näher erläutert. In den Zeichnungen zeigen:
**Fig. 1** eine schematische Systemübersicht des erfindungsgemäßen gebäudetechnischen Steuerungssystems, aus der die wesentlichen Einrichtungen des Systems ersichtlich werden;
**Fig. 2** eine vorzugsweise Ausführungsform des erfindungsgemäßen gebäudetechnischen Steuerungssystems, in dem das gebäudetechnische Steuerungssystem exemplarisch mit einem HVAC-System eines Gebäudes gekoppelt ist;
**Fig. 3** ein Geozonenkonzept um ein Gebäude das mit dem gebäudetechnischen Steuerungssystem der Fig.1 und/oder der Fig. 2 ausgestattet ist.

### DETAILLIERTE BESCHREIBUNG DER ZEICHNUNGEN

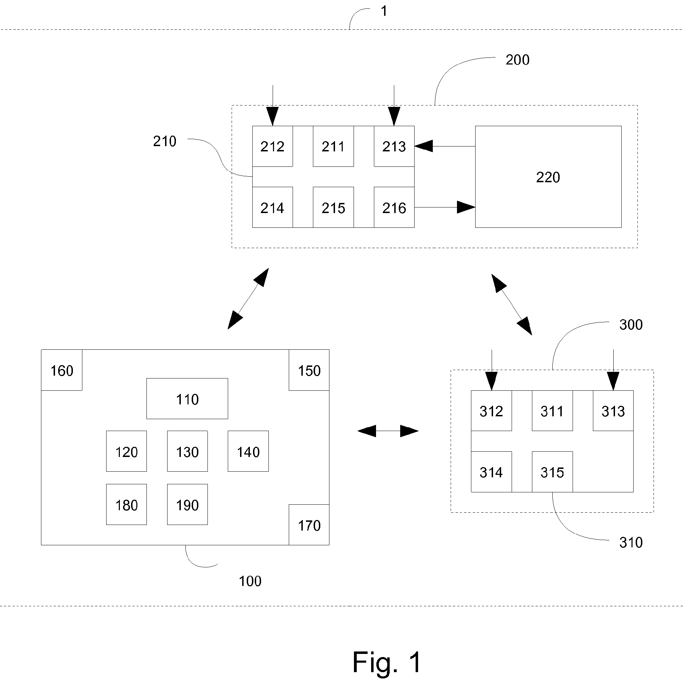

**Fig. 1** zeigt exemplarisch eine mögliche Ausführungsform eines erfindungsgemäßen gebäudetechnischen Steuerungssystems 1 als schematische Systemübersicht. Es weist eine Zentraleinheit 100 und mindestens eine gebäudetechnische Komponente 200 auf, wobei die gebäudetechnische Komponente 200 eine verteilte Schnittstelleneinheit 210 umfasst, die ausgebildet ist, funktional mit einer gebäudetechnischen Funktionseinheit 220, wie z.B. einer Raumheizung oder einem Energiespeicher, zusammenzuwirken.

Um mit der gebäudetechnischen Funktionseinheit 220 zusammenzuwirken können, weist die verteilte Schnittstelleneinheit 210 zumindest einen Aktor 216 auf, der ausgebildet ist, auf die gebäudetechnische Funktionseinheit zu wirken und dort eine Aktion auszulösen.

Abhängig von der Ausführungsform der mit dem Aktor 216 gekoppelten gebäudetechnischen Funktionseinheit 220 werden unterschiedliche Aktoren eingesetzt. Welcher Art der Aktor ist, ist für den Erfindungsgedanken von untergeordneter Bedeutung und richtet sich vornehmlich nach der gebäudetechnischen Funktionseinheit 220, das heißt, im einfachsten Fall kann der Aktor ein einfaches Relais, ein Optokoppler oder eine sonstige dem einschlägigen Fachmann bekannte Schalteinrichtung sein, wie sie zum Beispiel zum Ansteuern eines elektrischen Sonnenschutzes benötigt wird. Handelt es sich bei der gebäudetechnischen Funktionseinheit dagegen z.B. um einen Heizkörper, so kann der Aktor 216 ein Öffnen und Schließen eines Heizkörper-Thermostatventils bewirken. Die vorstehenden Beispiele stellen aber nur einen kleinen Ausschnitt aus den vielfältigen Möglichkeiten der Kopplung von Aktoren mit gebäudetechnischen Funktionseinheiten dar.

In vielen Fällen ist für ein erfolgreiches Zusammenwirken der verteilten Schnittstelleneinheit 210 mit der gebäudetechnischen Funktionseinheit 220 weiterhin ein Sensor 213 vorteilhaft, der Informationen über einen Zustand der gebäudetechnischen Komponente 200 bzw. der gebäudetechnischen Funktionseinheit 220 liefern kann. Am Beispiel eines elektrischen Sonnenschutzes könnte ein solcher Sensor zum Beispiel Informationen über einen Abdeckungsgrad des Sonnenschutzes erfassen. Entsprechend könnte bei einem Heizkörperthermostat-Ventilsteller der Sensor 213 einen Schließzustand des Heizkörper-Thermostatventils abfühlen und der verteilten Schnittstelleneinheit als Informationssignal bereitstellen.

Gleichermaßen kann der Sensor 213 der verteilten Schnittstelleneinheit 210 aber auch ein Sensor sein, der beliebige andere nicht mit der gebäudetechnischen Funktionseinheit in einem direkten funktionalen Zusammenhang stehende für das Steuerungssystem aber dennoch relevante Messgrößen erfasst. So kann der Sensor 213 zum Beispiel folgende physikalische Größen abfühlen: Innenraumtemperatur, Innenraumfeuchte, relative Feuchte, absolute Feuchte, IR-Wärmequellen, Rauch, Ausleuchtung eines Raumes, Schließzustand von Fenstern oder Türen, Verriegelungszustand von Fenstern oder Türen, Anwesenheit von Personen im Raum, Sonneneinstrahlung, Au-ßentemperatur, Zustand einer Glasfläche, Unversehrtheit einer Glasfläche.

Alle diese Größen lassen sich mittels physikalischer Effekte in ein elektrisches Signal wandeln. Vorrichtungen, welche aus den oben genannten Parametern ein elektrisches Signal erzeugen, sind beispielsweise als photoelektrische Wandler, thermoelektrische Wandler, pyroelektrische Wandler oder magnetoelektrische Wandler bekannt und werden unter dem Oberbegriff Sensor zusammengefasst.

Sensoren können auch den Zustand von mechanischen, elektromechanischen und elektrischen Befehlsgebern und/oder vergleichbaren Systemen erfassen.

Die verteilte Schnittstelleneinheit kann aber auch mehrere Sensoren 213 umfassen, von denen einer oder einige in einem direkten Funktionszusammenhang mit der gebäudetechnischen Funktionseinheit stehen und eine oder mehrere weitere Messgrößen erfassen, die im beschrieben Sinne nicht direkt mit der gebäudetechnischen Funktionseinheit im direkten Zusammenhang stehen.

Die verteilte Schnittstelleneinheit 210 umfasst weiterhin zur Signalverarbeitung eine Prozessoreinrichtung 211, die ausgebildet ist, zumindest ein Steuersignal an den Aktor 216 auszugeben und ein Sensorsignal des Sensors 213 zu verarbeiten. Die Prozessoreinrichtung 211 kann eine analoge oder auch eine digitale Verarbeitung der eingehenden Signale des Sensors 213 durchführen. Vorzugsweise erfolgt eine digitale Verarbeitung der eingehenden Signale. Weiterhin umfasst die Prozessoreinrichtung vorzugsweise einen Analog-Digital-Wandler, welcher auch analoge Signale eines Analogsensors in ein digitales Signal wandeln kann. Alternativ, kann auch der Sensor bereits einen Analog-Digital-Wandler umfassen und ein digitales Signal als Ausgangssignal liefern.

Weiterhin ist eine Kommunikationseinrichtung 214 mit der Prozessoreinrichtung 211 der verteilten Schnittstelleneinheit 210 verbunden. Die Kommunikationseinrichtung 214 umfasst eine Nachrichtenübermittlungs- und -empfangseinrichtung, die zum Datenaustausch sowohl kabelgebunden als auch drahtlos mit einer Kommunikationseinrichtung 150 der Zentraleinheit 100 verbunden sein kann. Ein Datenaustausch kann zum Beispiel über eine Internet-Verbindung erfolgen. Typische Übertragungstechniken umfassen, ohne Einschränkung darauf, WLAN- und Ethernet-Verbindungen. Insbesondere sind auch Verbindungen über Mobilfunksysteme, wie etwa GSM/GPRS, UMTS/3G, LTE/4G oder vergleichbare Mobilfunksysteme möglich. Als geeignetes Übertragungsprotokoll kann das TCP/IP-Protokoll verwendet werden. Gleichermaßen können drahtlos-Kommunikationstechnologien wie Z-Wave, ZigBee, Bluetooth, 6LowPan, wireless M-Bus und/oder EnOcean zum Einsatz kommen.

Zum Betrieb der verschiedenen Einrichtungen der verteilten Schnittstelleneinheit 210, wie zum Beispiel der Prozessoreinrichtung 211 oder der Kommunikationseinrichtung 210, sowie des Sensors 213 und Aktors 216, ist eine Energieversorgungseinrichtung 212 notwendig. Eine solche Energieversorgungseinrichtung kann zum Beispiel als netzgestützte Energieversorgung ausgeführt sein, z.B. ist dann die verteilte Schnittstelle ggf. auch über ein Netzteil an das Stromnetz des Gebäudes angeschlossen und wird darüber mit Energie versorgt. Eine netzgestützte Energieversorgung kann auch über die Power-Over-Ethernet-Technologie (PoE-Technologie) erfolgen, bei der die Stromversorgung über ein LAN- bzw. Ethernet-Kabel erfolgt, das zusätzlich auch eine Kommunikationsverbindung bereitstellt.

Weiter kann die Energieversorgungseinrichtung 212 der verteilten Schnittstelle 210 auch als netzunabhängige Energieversorgung ausgeführt sein, wozu ein elektrischer Energiespeicher und/oder ein Energiewandler vorzusehen ist. Mögliche Energiespeicher umfassen elektrochemische Energiespeicher, wie etwa Batterien und Akkumulatoren, oder Ladungsspeicher, die nach dem Kondensatorprinzip funktionieren. Bei einer netzunabhängigen Energieversorgung ist ein solcher Energiespeicher vorzugsweise mit einem Energiewandler zu koppeln, welcher nichtelektrische Umgebungsenergie, wie Licht, Wärme, Bewegung, elektromagnetische Wellen und andere Umgebungsenergie, in elektrische Energie wandelt. Typische Beispiele umfassen Photovoltaikzellen und thermoelektrische Elemente. Die gewonnene elektrische Energie kann von dem Energiewandler an einen Energiespeicher übergeben werden, um diese bei Bedarf an die elektrischen Verbraucher, d.h. Einrichtungen, der verteilten Schnittstelle 210 abzugeben.

Gegebenenfalls umfasst die verteilte Schnittstelleneinheit 210 zusätzlich eine mit der Prozessoreinrichtung 211 gekoppelte Anwenderschnittstelle 215, die vorzugsweise als Touchdisplay oder kapazitives Touchfeld aber auch als einfacher Taster und/oder Leuchtdiode ausgeführt sein kann.

Die gebäudetechnische Komponente 200 umfasst eine verteilte Schnittstelleneinheit 210 und eine gebäudetechnische Funktionseinheit 220. Dies soll verdeutlichen, dass auch integrierte Lösungen denkbar sind, bei denen die verteilte Schnittstelle nicht als gesonderte Funktionseinheit in Erscheinung tritt und einen integralen Bestandteil der gebäudetechnischen Komponente 200 darstellt.

Zur Veranschaulichung einer möglichen alternativen Verwendung einer verteilten Schnittstelleneinheit des erfindungsgemäßen Steuerungssystems umfasst das gebäudetechnische Steuerungssystem 1 der Fig. 1 weiterhin eine Sensorkomponente 300. Die Sensorkomponente 300 umfasst eine verteilte Schnittstelleneinheit 310, die im Wesentlichen die gleichen Einrichtungen/Funktionseinheiten umfasst wie die verteilte Schnittstelleneinheit 210 der Gebäudekomponente 200. So umfasst sie eine Prozessoreinrichtung 311, eine Energieversorgungseinrichtung 312 und eine Kommunikationseinrichtung 314, wie sie zuvor in Zusammenhang mit der verteilten Schnittstelleneinheit 210 beschrieben wurde.

Weiterhin umfasst die verteilte Schnittstelleneinheit 310 auch einen Sensor 313 und/oder eine Anwenderschnittstelle 315. Ein Sensor 313 bildet eine Informationsquelle, die dem gebäudetechnischen Steuerungssystem 1 physikalische Messgrößen bereitstellt, die nicht in einem direkten Funktionszusammenhang mit einer gebäudetechnischen Funktionseinheit im vorstehend beschriebenen Sinne steht. So kann zum Beispiel ein Temperatursensor Informationen über eine Raumtemperatur liefern. Zusätzlich oder auch unabhängig von einem Sensor 313 kann eine Anwenderschnittstelle 315 vorgesehen sein. Die Anwenderschnittstelle 315 stellt einem Gebäudenutzer eine Möglichkeit bereit, auf das gebäudetechnische Steuerungssystem 1 einzuwirken. So kann zum Beispiel das Betätigen eines Tasters an das gebäudetechnische Steuerungssystem 1 mittels der Kommunikationseinrichtung 314 übermittelt werden.

Desweiteren weist das gebäudetechnische Steuerungssystem 1 eine Zentraleinheit 100 auf, die eine Prozessoreinrichtung 110 und eine damit gekoppelte Kommunikationseinrichtung 150 aufweist.

Die Kommunikationseinrichtung 150 der Zentraleinheit 100 ist geeignet mit den Kommunikationseinrichtungen 214, 314 der verteilten Schnittstelleneinheiten 210, 310 zu kommunizieren, um Daten und Anweisungen auszutauschen. Die Kommunikationseinrichtung 150 der Zentraleinheit 100 ist mit den Kommunikationseinrichtungen 214, 314 der Schnittstelleneinheiten 210, 310 verbunden, um Daten und Instruktionen von den Schnittstelleneinheiten 210, 310 zu empfangen und an sie zu senden. Zwischen den verteilten Schnittstelleneinheiten 210, 310 kann ein unidirektionaler oder bidirektionaler Datenaustausch stattfinden. Dabei kann die Kommunikation zwischen der Zentraleinheit 100 sowohl direkt mit einer verteilten Schnittstelleneinheit 210, 310 als auch über die Kommunikationseinrichtungen 214, 314 einer oder mehrerer weiterer verteilter Schnittstelleneinheiten 210, 310 erfolgen, die im Rahmen der Kommunikationsverbindung eine Weiterleitungsfunktion übernimmt. So kann zum Beispiel die Kommunikationsverbindung zwischen der Zentraleinheit 100 und den verteilten Schnittstelleneinheiten 210, 310 als drahtgebundenes oder drahtloses vermaschtes Netz (mesh network) ausgebildet sein. Gemäß einer vorzugsweisen Ausführungsform setzen sich die verteilten Schnittstelleneinheiten 210 zu einem selbstorganisierenden Netzwerk zusammen, das sich bei Ausfällen einzelner Einheiten neu organisiert.

Weiterhin kann die Zentraleinheit 100 eine Internet-Datenschnittstelle 130 aufweisen, über die der Zentraleinheit 100 Internetdaten, wie etwa Witterungsdaten umfassend Temperaturen, Sonneneinstrahlung und Wettervorhersagen, bereitgestellt werden. Übliche Verfahren zum Abrufen von Internetdaten umfassen HTTP-Anfragen und können zum Beispiel das REST-Protokoll verwenden. Alternative Protokolle umfassen XML-RPC sowie das SOAP-Protokoll. Gleichermaßen kann die Internetdatenschnittstelle auch Daten bereitstellen, auf die Internetrechner zugreifen können.

Die Zentraleinheit 100 umfasst weiterhin eine Nutzerzustands-Bestimmungseinrichtung 120, die eine Stromverbrauchserfassungseinrichtung umfasst und auch eine oder mehrere der folgenden Einrichtungen umfassen kann: eine Gebäudenutzer-Geodatenerfassungseinrichtung, eine Gerätverwendungserfassungseinrichtung und eine Funkfrequenzüberwachungseinrichtung.

Eine Gebäudenutzer-Geodatenerfassungseinrichtung ermittelt Geopositionsdaten eines oder mehrerer Gebäudenutzer, die von dem erfindungsgemäßen Steuerungssystem zur Steuerung einer Gebäudekomponente verwendet werden, wobei die Geopositionsdaten eines oder mehrerer Gebäudenutzer bestimmen, in welchen Zustand die Gebäudekomponente versetzt wird. Typische Geopositionsdaten umfassen eine Positionsangabe über Längen- und Breitengrad. Vorzugsweise umfassen Geopositionsdaten auch eine Bewegungsrichtung und/oder -geschwindigkeit mit der sich ein Gebäudenutzer gerade bewegt. Üblicherweise muss dazu ein Gebäudenutzer ein Gerät mit sich führen, das ausgebildet ist, solche Geopositionsdaten zu ermitteln und an die Zentraleinheit 1 zu übermitteln. Vorzugsweise erfolgt die Übermittlung der Geopositionsdaten zunächst an einen zentralen Internetserver, der diese Daten zum Abruf vorhält. Von diesem Internetserver können dann die Geopositionsdaten über eine Internetschnittstelle 130 von der Zentraleinheit 100 abgerufen werden. Typischerweise sind heutige Mobiltelefone standardmäßig mit einer Einrichtung ausgestattet, die geeignet ist, die Geopositionsdaten des Mobiltelefonbesitzers zu erfassen. Über ein Softwareanwendung, die auf dem Mobiltelefon ausgeführt wird, werden die Daten dann an einen zentralen Internetserver übermittelt. Die Firma Google stellt unter der Produktbezeichnung Google Latitude ein Softwarepaket bereit, das auf den verschiedensten Mobiltelefonen installiert werden kann und ausgebildet ist, die Geopositionsdaten des Mobiltelefonbesitzers an einen Internetserver zu übertragen. Der Internetserver stellt eine Schnittstelle bereit, über die die Geopositionsdaten eines Google-Latitude Nutzers dann ausgelesen werden können. So kann die Internetschnittstelle 130 die Geopositionsdaten eines Gebäudenutzers der Nutzerzustands-Bestimmungseinrichtung 120 der Zentraleinheit 100 bereitstellen.

Eine Gerätverwendungserfassungseinrichtung ist ausgebildet, die Verwendung von bestimmten in Haushalten verwendeten Geräten, wie zum Beispiel die Verwendung eines Computers oder eines Fernsehgerätes oder eines Trainingsgerätes, zu erfassen. So kann zum Beispiel ein Fahrrad-Hometrainer mit einer Einrichtung ausgestattet sein, die der Gerätverwendungserfassungseinrichtung mitteilt, wenn ein Gebäudenutzer gerade auf dem Fahrrad-Hometrainer trainiert. Gleichermaßen können Fernsehgeräte oder Computer gleichermaßen Einrichtungen aufweisen, die jeweils eine Verwendung des entsprechenden Gerätes an die Gerätverwendungserfassungseinrichtung melden.

Im Falle eines Computers kann eine solche Meldeeinrichtung als Software zum Beispiel als sog. Browser-Plugin oder als sog. Tray-Applikation ausgeführt sein. Der Computer meldet dann kontinuierlich an die Gerätverwendungserfassungseinrichtung, dass ein Benutzer gerade seinen Computer verwendet und die Temperatur im Gebäude oder Raum auf eine nicht-körperliche Tätigkeit hin leicht erhöht werden muss, um ein Auskühlen des Gebäudenutzers vor dem Rechner zu verhindern. Auskühlen eines Gebäudenutzers ist in der Regel ein Problem wenn der oder die Gebäudenutzer Tätigkeiten ausüben, die durch weitgehende körperliche Inaktivität gekennzeichnet sind.

Die Nutzerzustands-Bestimmungseinrichtung 120 kann auch eine Funkfrequenzüberwachungseinrichtung umfassen, die Funkfrequenzbänder auf bestimmte Charakteristiken hin überwacht. Üblicherweise benutzt heutzutage fast jeder Gebäudenutzer ein Mobiltelefon. Wenn der Gebäudenutzer sich im Gebäude bzw. Gebäudeabschnitt aufhält, lässt sich im Gebäude eine bestimmte für ein Mobiltelefon charakteristische Funkfrequenzabstrahlung durch Überwachen der entsprechenden Funkfrequenzbänder für Mobilfunkanwendungen messen. Werden solche charakteristischen Merkmale bei der Funkfrequenzüberwachung festgestellt, kann darauf geschlossen werden, dass sich ein Gebäudenutzer im Gebäude befindet und die Funkfrequenzüberwachungseinrichtung meldet dies an die Nutzerzustands-Bestimmungseinrichtung 120.

Gleichermaßen kann die Funkfrequenzüberwachungseinrichtung die Frequenzbänder für WiFi/Wireless-LAN und/oder Bluetooth überwachen. Sofern eine Aktivität in diesen Frequenzbändern festgestellt werden kann, kann davon ausgegangen werden, dass ein Gebäudenutzer gerade einen Personalcomputer verwendet. Personalcomputer und insbesondere tragbare Computer, wie auch Tablets und Mobiltelefone, sind häufig über WiFi-Verbindungen an das Internet angeschlossen. Häufig werden auch drahtlose Tastaturen über Bluetooth an einen Computer angebunden. Eine messbare Aktivität in den Bluetooth-Funkfrequenzen kann also auf die Computernutzung hindeuten. Die Funkfrequenzüberwachungseinrichtung kann von dem erfindungsgemäßen gebäudetechnischen Steuerungssystem also zur Ableitung einer geeigneten Steuerungsvorgabe für eine gebäudetechnische Funktionseinheit verwendet werden.

Die Nutzerzustands-Bestimmungseinrichtung 120 umfasst auch eine Stromverbrauchserfassungseinrichtung. Die Stromverbrauchserfassungseinrichtung kann mit einem Intelligenten Stromzähler, d.h. SmartMeter, gekoppelt sein. Gleichermaßen ist der Bezug der Stromverbrauchsdaten auch aus einem sog. Datawarehouse eines Stromanbieters möglich. Ein solches Datawarehouse stellt die Stromverbrauchsdaten eines Nutzers über eine Internetschnittstelle bereit, sodass die Zentraleinheit 100 auch über die Internetschnittstelle 130 solche Stromverbrauchsdaten eines Gebäudenutzers beziehen kann. Aus den Stromverbrauchsdaten kann die Nutzerzustands-Bestimmungseinrichtung 120 auf einen Nutzerzustand schließen.

Die Zentraleinheit 100 übernimmt innerhalb des gebäudetechnischen Gesamtsystems die Auswertung und Verarbeitung aller Sensordaten, um daraus Steuerungsbefehle für die verschiedenen verteilten Schnittstelleneinheit 210, 310 abzuleiten. Die Zentraleinheit 100 kann als Internetserver oder als eine in dem Gebäude zu installierende Einheit ausgebildet sein.

Vorzugsweise umfasst die Zentraleinheit 100 dazu eine Datenspeichereinrichtung 140, um die über die verschiedenen Einrichtungen der Zentraleinheit 100 erfassten Daten zu speichern. Zum Beispiel speichert die Datenspeichereinrichtung 140 von den verteilten Schnittstellen 210, 310 übermittelte Daten. Weiterhin können auch über die Internet-Datenschnittelle 130 erhaltene Daten gespeichert werden, um diese über die Prozessoreinrichtung 110 oder eine statistische Auswertungseinrichtung 180 zu verarbeiten. Die statistische Auswertungseinrichtung kann auch als Programmlogik in der Prozessoreinrichtung 110 ausgeführt sein.

Die Prozessoreinrichtung 110 bzw. die statistische Auswertungseinrichtung 180 kann vorzugsweise mit einer Nutzerprofil-Speicher- und Verwaltungseinrichtung zusammenwirken, wodurch bestimmte in Nutzerprofilen hinterlegte Steuerungsvorgaben und Wünsche der Gebäudenutzer in die Steuerungslogik mit einbezogen werden können. Die statistische Auswertungseinrichtung 180 ist ausgebildet, aus in der Vergangenheit von der Nutzerzustands-Bestimmungseinrichtung bestimmtem Nutzerverhalten ein typisches Verhaltensprofil eines Gebäudenutzers bzw. mehrerer Gebäudenutzer zu bestimmen, das im weiteren Verlauf zur Bestimmung von Steuerungsvorgaben verwendet wird.

Die Zentraleinheit 100 empfängt Daten von den verteilten Schnittstelleneinheiten 210, 310, sodass in der Zentraleinheit verschiedene Datenquellen zusammen laufen. Diese Datenquellen werden ausgewertet und zur Berechnung/Bestimmung geeigneter Steuerungs- bzw. Regelungssignale oder -vorgaben verarbeitet. Dabei werden aktuelle Daten ebenso wie historische Daten aber auch auf statistischen Verfahren beruhende Prognosen verwendet, um auf einer stochastischen Basis stets ein bestmögliches Steuersignal vorzugeben. Es ist vorgesehen, dass das erfindungsgemäße Steuerungssystem dadurch über die Zeit eine immer bessere Regelung des gebäudetechnischen Systems erreicht, da es mit der Zeit Gewohnheiten der Gebäudenutzer besser deuten kann und zum Beispiel fehlerbehaftete Signale als nicht korrekt deuten kann.

Weiterhin benötigt die Zentraleinheit 100 eine Energieversorgungseinrichtung 160. Die verschiedenen Möglichkeiten der Realisierung einer Energieversorgungseinrichtung 160 wurden bereits mit Bezug auf die verteilten Schnittstelleneinheiten 210, 310 ausführlich beschrieben.
Die Zentraleinheit kann eine Anwenderschnittstelle 170 aufweisen, um einem Benutzer eine Möglichkeit bereitzustellen, Einstellungen an dem gebäudetechnischen Steuerungssystem vorzunehmen und sich Berichte über den bisherigen Betrieb des Systems anzeigen zu lassen. Die Anwenderschnittstelle 170 ist vorzugsweise als Internetportal und/oder als SmartPhone-Applikation ausgebildet, auf das ein Nutzer über einen Webbrowser oder vergleichbare netzwerkfähige Software-Anwendungen zugreifen kann. Die Anwenderschnittstelle 170 kann weiterhin eine Anzeigeeinheit in Kombination mit einem Eingabegerät aufweisen. Eine geeignete Anzeigeeinheit mit einer integrierten Anzeigeeinheit ist ein Touchdisplay.

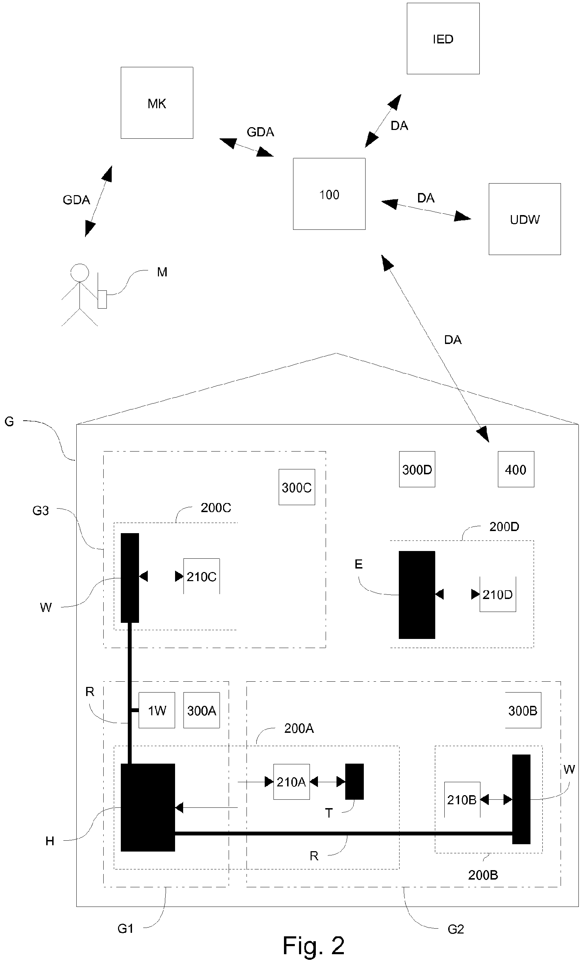

Fig. 2 zeigt eine vorzugsweise Ausführungsform des erfindungsgemäßen gebäudetechnischen Steuerungssystems, in dem das gebäudetechnische Steuerungssystem exemplarisch mit einem HVAC-System eines Gebäudes gekoppelt ist.

HVAC-Steuerungssysteme finden Verwendung bei der Steuerung von Heiz- und Kühlsystemen in Gebäuden. Im Regelfall werden HVAC Systeme durch dezentrale Thermostate an Heizkörpern und/ oder durch ein zentrales Thermostat zur Steuerung des HVAC Gerätes in Ihrer Leistungsabgabe geregelt. In den meisten Fällen gibt die zentrale Steuereinheit des HVAC Gerätes den Referenzwert vor und zusätzliche dezentrale Thermostate übernehmen die Funktion einer individuellen Verfeinerung der Leistungsvorgabe für gewisse Raumabschnitte.

HVAC-Systeme besitzen die Eigenschaft einer gewissen Trägheit. Das heißt, es ist eine Vorlaufzeit notwendig, um ein gewünschtes Raumklima zu erreichen. Dies ist ein fundamentaler Unterschied zu beispielsweise einer Raumbeleuchtung, die mit einem Schalter sofort in den gewünschten Zustand versetzt werden kann.

Damit HVAC Systeme nicht ungeachtet der Raumnutzung 24 Stunden 7 Tage die Woche auf voller Leistung fahren, bieten neuartigere Regler die Möglichkeit einer zeitlichen und tagesabhängigen Programmierung durch eine Benutzerschnittstelle (User-Interface) am Regler selbst. Nutzer können somit die Heiz- bzw. Kühlleistung ihren individuellen Wünschen anpassen. Beispielsweise werden diese so eingestellt, dass es eine Nachtabsenktemperatur und während der Arbeitstage eine Absenkung der Leistung während der außerhaus Arbeitszeit berücksichtigt wird. Diese Leistungsabsenkungen dienen der Ernergieeinsparung.

Erfahrungsgemäß ist die angesprochene Programmierung der HVAC-Steuerungssysteme wenig benutzerfreundlich, sehr zeitaufwendig und in den meisten Fällen in Bezug auf die Optimierung und den Klima-Komfort im Gebäude ungenügend. Aus diesem Grund sind die meisten HVAC-Steuerungssysteme in Bezug auf die Raumnutzung gar nicht oder sehr schlecht optimiert. Beispielhaft sei zu erwähnen, dass Nutzungszeiten variieren und häufig bei der Programmierung nicht genau vorausgesagt werden können. Dies hat zur Folge, dass bei Nutzungsabweichung von der Programmierung entweder Energie verschwendet wird oder das Raumklima nicht den gewünschten Komfort bietet.

Die **Fig. 2** verdeutlicht die Verbindung des erfindungsgemäßen gebäudetechnischen Steuerungssystems mit einem in einem Gebäude G und dessen Gebäudeabschnitten G1, G2, G3 vorgesehenen HVAC-System. Das dargestellte HVAC-System umfasst eine zentrale Energiewandlungseinrichtung H und einen oder mehrere dezentrale Wärmetauscher W, die in verschiedenen Räumen bzw. Gebäudeabschnitten G2, G3 des Gebäudes G angeordnet sind. Handelt es sich bei dem HVAC-System um eine Heizungsanlage, würde ein Brenner einer solchen Heizungsanlage eine Energiewandlungseinrichtung im Sinne dieser Beschreibung darstellen. Gleichermaßen bildet bei einer Klimaanlage die Kompressoreinheit eine Energiewandlungseinrichtung im Sinne dieser Beschreibung. Bei einer Heizungsanlage dient der Brenner dazu ein im Heizungssystem umlaufendes Wärmetransportmedium durch die Verbrennung eines Brennstoffs oder durch Umwandlung elektrischen Stroms zu erwärmen. Das Wärmetransportmedium wird dann durch das HVAC-System geleitet, wobei es seine Wärme über verteilt angebrachte Wärmetauscher an die Umgebungsluft in Räumen in dem Gebäude abgibt und so die Räume erwärmt. Analog wird bei einer Klimaanlage der Umgebungsluft in den Räumen durch das Wärmetransportmedium Wärmenergie entzogen und durch die Energiewandlungseinrichtung H in der Regel an eine Außenumgebung abgeführt.

Die **Fig. 2** zeigt in den Gebäudeabschnitten G1 und G2 eine gebäudetechnische Komponente 200A, die eine verteilte Schnittstelleneinheit 210A umfasst, die mit der Energiewandlungseinrichtung H des HVAC-Systems des Gebäudes G gekoppelt ist. Das erfindungsgemäße Steuerungssystem ist so direkt mit der Energiewandlungseinrichtung H verbunden und kann auf diese regelnd bzw. steuernd einwirken. Die dazu notwendige Verbindung zwischen der verteilten Schnittstelleneinheit 210A und dem HVAC-System kann drahtlos und/oder kabelgebunden erfolgen. Beispielhaft kann die verteilte Schnittstelleneinheit 210A so bei einer Heizungsanlage den Brenner nach Bedarf ein- oder ausschalten. Die verteilte Schnittstelleneinheit 210A bildet folglich innerhalb des Gebäudes G bzw. der Gebäudeabschnitte G1, G2 eine lokale Einheit, die ausgebildet ist, eine Datenverbindung mit der entfernten Zentraleinheit 100 aufzubauen und Daten auszutauschen.

Die verteilte Schnittstelleneinheit 210A weist die mit Bezug auf die **Fig. 1** beschriebenen Einrichtungen auf, wobei diese zur Vermeidung von Wiederholungen nicht explizit dargestellt sind. So ist eine Kommunikationseinrichtung oder Nachrichtenübermittlungs und -empfangseinrichtung zum Datenaustausch mit den weiteren verteilten Schnittstelleneinheiten 210B-D und/oder der Zentraleinheit 100 vorgesehen. Vorzugsweise kommunizieren die verteilten Schnittstelleneinheiten 210 untereinander drahtlos und können, soweit dies erforderlich sein sollte um größere Distanzen bei geringen Sendeleistungen zu überbrücken, ein Mesh-Network ausbilden.

Vorzugsweise bildet ein entfernter Rechenserver, wie etwa ein Internet-Server, die Zentraleinheit 100 des erfindungsgemäßen gebäudetechnischen Steuerungssystems aus. Folglich kann der Datenaustausch zwischen den Schnittstelleneinheiten 210 und/oder der Zentraleinheit 100 zum Beispiel über eine Internet-Verbindung erfolgen. Üblicherweise ist eine Gateway-Einrichtung 400 notwendig, wie zum Beispiel eine Bridge oder ein Router, um zwischen einem innerhalb des Gebäude verwendeten Kommunikationsverfahren und einem Kommunikationsverfahren zu vermitteln, das zur Anbindung an das Internet geeignet ist. Typische Kommunikationsverfahren und Übertragungstechniken zur Anbindung an das Internet umfassen, ohne Einschränkung darauf, ISDN-, DSL, Kabel-DSL-, WAN-, LAN-, WLAN- und Ethernet-Verbindungen. Insbesondere sind auch Verbindungen über Mobilfunksysteme, wie etwa GSM/GPRS, UMTS/3G, LTE/4G oder ähnliche Systeme möglich.

Vorzugsweise ist die verteilte Schnittstelleneinheit 210A zur Anbindung an eine Energiewandlungseinrichtung H als Retrofit- oder Nachrüstlösung ausgestaltet, die mit einem in dem Gebäude G oder einem Gebäudeabschnitt G1, G2, wie etwa einer Wohnung, bereits vorhandenen Regel- bzw. Steuerungseinheit T, wie etwa einem von Heizungsanlagenhersteller bereitgestellten Heizungsthermostat, gekoppelt werden kann. Im Normalbetrieb übernimmt die verteilte Schnittstelleneinheit 210A des erfindungsgemäßen Steuerungssystems die Steuerung bzw. Regelung des HVAC-Systems. Steuer- und Regelvorgaben der vorhandenen bzw. ursprünglich installierten Regel-/Steuerungseinheit T werden nicht durchgeschaltet. Alternativ kann die vorhandene bzw. ursprünglich installierte Regel-/Steuerungseinheit T im Normalbetrieb des gebäudetechnischen Steuerungssystems auch die ursprünglich installierte Regel-/Steuerungseinheit T teilweise oder vollständig deaktiveren.

Durch eine Kopplung der verteilten Schnittstelleneinheit 210A mit der bereits installierten/vorhandenen Regel- bzw. Steuerungseinheit T kann ein ausfallsicherer-Betrieb (Fail-Safe) des HVAC-Systems gewährleistet werden, da bei einem Ausfall oder einer Fehlfunktion der verteilten Schnittstelleneinheit 210A auf das ursprünglich installierte System durch Umschalten zurückgegriffen werden kann. Ein solches Zurückgreifen kann zum Beispiel durch ein Durchschalten der Signale der ursprünglich installierten Regel- bzw. Steuerungseinheit oder ein Reaktivieren der ursprünglich installierten Regel- bzw. Steuerungseinheit T erfolgen.

Der beschriebene ausfallsichere Betrieb (Fail-Safe-Betrieb) des erfindungsgemäßen Steuerungssystems kann durch eine in den Figuren nicht dargestellte Umschalteinheit realisiert werden. Die Umschalteinheit ist zur Umschaltung auf die herkömmliche Regeleinheit bzw. das Thermostat T ausgebildet. Technisch kann diese Funktion beispielsweise durch ein Umschaltrelais realisiert sein.

Die Funktionsweise der Umschalteinheit ist dabei keineswegs auf einen rein ausfallsicheren Betrieb (Fail-Safe-Betrieb) begrenzt. Vorzugsweise ist die Lösung so ausgeführt, dass mittels eines Signals von der Zentraleinheit 100 oder auch von einem Taster an der Mess- und Regeleinheit 10 selbst, der Stromfluss sowie die Signale bei Bedarf an der verteilten Schnittstelleneinheit 210A vorbeigeleitet werden können, als wäre die verteilte Schnittstelleneinheit 210A des erfindungsgemäßen Steuerungssystems nicht vorhanden. Mit anderen Worten übernimmt die herkömmliche bzw. ursprünglich bereits vorhandene bzw. installierte Regeleinheit T im Falle der Vorbeileitung, die Steuerung des HVAC-Systems. Im Falle der Nicht-Vorbeileitung steuert die verteilte Schnittstelleneinheit 210A bzw. die Zentraleinheit 100 des erfindungsgemäßen Steuerungssystem. Diese Umschaltmöglichkeit bietet den Vorteil, dass bei Nutzerwunsch, einer Systemstörung oder bei einem Systemausfall von dem erfindungsgemäßen Steuerungssystem auf die ursprüngliche dem installierten HVAC-System zugehörige Steuer-/Regeleinheit T umgeschaltet werden kann.

Gemäß einer vorzugsweisen Ausbildung der Kopplung der verteilte Schnittstelleneinheit 210A mit der ursprünglichen bzw. vorhandenen Steuer- bzw. Regeleinheit T ist vorgesehen, die Signale und/oder Zustände der ursprünglichen bzw. vorhandenen Steuer- bzw. Regeleinheit T auszulesen bzw. zu erfassen. Dieses Auslesen der Signale und/oder Zustände kann sowohl erfolgen, wenn die verteilte Schnittstelleneinheit 210A des erfindungsgemäßen Steuerungssystems 1 die Kontrolle über das HVAC-System hat, als auch wenn, die vorhandene bzw. ursprüngliche Steuer-/Regeleinheit T aktiv das HVAC-System regelt und die verteilte Schnittstelleneinheit 210A überbrückt bzw. ausgeschaltet ist. Durch Erfassen der Regel-/Steuervorgaben der ursprünglichen bzw. vorhandenen Steuer-/Regeleinheit T ist es möglich Vergleiche der Regelungsleistung bzw. des Regelungserfolgs der beiden Einheiten anzustellen. So kann zum Beispiel ermittelt werden, ob und wie hoch Einsparungen in Bezug auf den Energieverbrauch sind, die durch Verwendung des erfindungsgemäßen Steuerungssystems erreicht werden. Insbesondere kann so ermittelt werden, welche Energieverbräuche durch T verursacht worden wären, während die verteilte Schnittstelleneinheit 210A des erfindungsgemäßen Steuerungssystems das HVAC-System gesteuert hat.

Durch Auslesen bzw. Überwachen und Erfassen der Signale und/oder Zustände der ursprünglichen Regeleinheit T während einer Zeitspanne, wie zum Beispiel einer Woche, während der die verteilte Schnittstelleneinheit 210A nicht das HVAC-System steuert, lässt sich eine Temperatur- und Zeitschaltprogrammierung der ursprünglichen Regeleinheit T aus den von der ursprünglichen Regeleinheit T gesendeten Schaltbefehlen rekonstruieren ohne die Programmierung der ursprünglichen Regeleinheit T kennen zu müssen.

Der angesprochene Vergleich der Regelungsleistung bzw. des Regelungserfolgs der beiden Einheiten kann folglich auf dem Vergleich zwischen der rekonstruierten Programmierung der ursprünglichen Regeleinheit und dem Regelungsverhalten der verteilten Schnittstelleneinheit 210A basieren.

Obwohl in der **Fig. 2** nicht nochmals explizit dargestellt, benötigt die verteilte Schnittstelleneinheit 210A zum Betrieb eine Stromversorgung. Als Stromversorgung können handelsübliche Netzteile, Power-Over-Ethernet oder sonstige dem Fachmann bekannte Lösungen eingesetzt werden. Im Fall einer Retrofit-/Nachrüstlösung kann aber insbesondere auch eine Nutzung oder Mitnutzung der Stromversorgung der ursprünglich installierten Regel- bzw. Steuerungseinheit T in Betracht kommen, wodurch auf eine separate Stromversorgung verzichtet werden kann. Üblicherweise erfolg die Stromversorgung über Anschlussleitungen, die die Energiewandlungseinrichtung H mit dem Thermostat T verbinden. Vorzugsweise ist daher in der verteilten Schnittstelleneinheit 210A ein Spannungswandlungseinrichtung vorgesehen, die eine für den Betrieb der verteilten Schnittstelleneinheit 210A notwendige Versorgung gewährleistet.

Eine Anwenderschnittstelle der Zentraleinheit des erfindungsgemäßen Steuerungssystems stellt über ein internetfähiges Gerät IED, wie zum Beispiel einen Internet-PC, ein Smartphone (Mobiltelefon) oder einen Tablet-Computer, Systemzustände und historische Daten des Steuerungssystems dar und erlaubt es Einstellungen des Steuerungssystems zu verändern.

In der Fig. 2 ist eine Möglichkeit der Geopositionsdatenerfassung eines oder mehrerer Gebäudenutzer dargestellt, dabei erfolgt die Ortung der Geoposition eines Gebäudenutzers anhand eines Mobiltelefons M, das der Gebäudenutzer mit sich führt. Ein Lokalsierungsprozess zur Bestimmung einer Geoposition sowie weiterer Geopositionsdaten, wie einer Bewegungsrichtung oder Geschwindigkeit, kann über ein GPS-Modul in dem Mobilfunkgerät und/oder durch Bestimmung einer Kennung oderer mehrerer Kennungen von Mobilfunkzellen erfolgen, in denen sich das Mobiltelefon befindet oder bewegt. Die Zellendaten stehen im Kernnetz KM eines Mobilfunkanbieters zur Verfügung und können von dem Mobilfunkanbieter/Netzbetreiber der Zentraleinheit 100 des erfindungsgemäßen Steuerungssystems bereitgestellt werden. Verfahren zur Mobiltelefonortung umfassen die Bestimmung einer Cell-ID oder eine Triangulationspeilung aus der auf eine Position und/oder Geschindigkeit geschlossen werden kann.

Im erfindungsgemäßen Steuerungssystem können eine oder mehrere geographische Grenzen (Geo-zones) definiert oder hinterlegt sein. Sofern sich der Nutzer zum Gebäude hin bewegt, wird die HVAC-Anlage auf eine gewünschte Raumtemperatur gesteuert. Bewegt der Nutzer sich vom Gebäude weg wird die HVAC-Anlage in den definierten Energiesparmodus geregelt. Die Regelung kann einstufig oder mehrstufig über eine oder mehrere geographische Grenzen erfolgen.

Eine vorteilhafte Ausführungsform des erfindungsgemäßen Steuerungssystems sieht einen Lokalisierungsprozess der Gebäudenutzer und einen damit gekoppelten Steuerungsalgorithmus vor, welcher die Präferenzen in Bezug auf eine Wunschtemperatur des Gebäudes verschiedener Gebäudenutzer berücksichtigt. Beispielsweise bevorzugt Bewohner A die Raumtemperatur X° und Bewohner B die Temperatur Y°. Dementsprechend kann das Steuerungssystem bei Anwesenheit von A auf X° regeln und bei Anwesenheit von B auf Y° regeln. Für den Fall, dass A und B anwesend sind, kann im System eine weitere Temperatur festgelegt werden oder die höhere der beiden Temperaturen verwendet werden.

Die Information über eine Geoposition eines Gebäudenutzers kann erlauben, eine Vorlaufzeit bei der Steuerung des HVAC-Systems zu berücksichtigen, die das HVAC-System benötigt, um das Gebäude G oder die Gebäudeabschnitte G1-3 auf eine Vorgabetemperatur aufzuheizen.

Dadurch, dass in der Zentraleinheit 100 des erfindungsgemäßen Steuerungssystems zahlreiche Datenquellen (verteilte Schnittstelleneinheiten) zusammengeführt werden, ist es möglich über die Zeit die Charakteristika der HVAC-Anlage und des Gebäudes bei verschiedenen Randbedingungen, wie etwa bei unterschiedlichen Witterungsbedingungen, zu erfassen und für Steuerungsvorgaben des erfindungsgemäßen Steuerungssystems nutzbar zu machen. So kann stetig ein besseres Ergebnis bzgl. des Raumklimas bei dem geringsten Energieeinsatz erreicht werden. Die Zentraleinheit 100 führt dazu Berechnungen aus, die auf einer gesammelten Datenbasis sowie Wahrscheinlichkeiten basiert, um eine bestmögliche Steuerungsvorgabe zu bestimmen. Verwendet werden Beispielsweise die Daten der physikalischen Parameter im Gebäude, die Informationen über die örtliche Lokalisierung der Gebäudenutzer, Eingabedaten, die dem Steuerungssystem über die Benutzerschnittstelle zugeführt werden können, aber auch Wetterdaten und -Prognosen aus zentralen Informationsquellen aus dem Internet.

Eine weitere vorteilhafte Ausführungsform des Steuerungssystems für HVAC sieht vor zentrale Wetterinformationen von Providern aus dem Internet nutzbar zu machen um die Steuerung zu optimieren. Bereits heute verwenden einige HVAC-Systeme Außentemperatursensoren, um witterungsbasiert HVAC-Systeme zu regeln. Durch eine Nutzung von Online-Wetterdaten ist kein Außentemperatur Sensor mehr nötig. Zudem können Prognosedaten, wie Wettervorhersagen, die Steuerung des HVAC-Systems verfeinern. Ein weiterer Vorteil von Online-Wetterdaten ist, dass auch die Sonneneinstrahlung und Regen zur Steuerung der HVAC-Systeme im Berechnungsalgorithmus der Zentraleinheit 100 berücksichtigt werden können. Sonneneinstrahlung hat insbesondere bei Häusern mit viel Fensterfläche einen großen Einfluss auf die Temperatur im Gebäude.

Beispielhaft ist zu erwähnen, dass das erfindungsgemäße Steuerungssystem mit Hilfe der Wetterdaten und Prognosen sehr genau vorhersagen kann, wann sich in den Morgenstunden das Gebäude durch die Sonne erwärmen und daher weniger Heizleistung benötigt werden wird. Entsprechend kann eine Regelungsvorgabe/Steuerungsvorgabe bei einer sonnigen Vorhersage für den Morgen weniger Heizleistung vorsehen, während herkömmliche Systeme diese Effekte nicht berücksichtigen können.

Indem Korrelationen zwischen verschiedenen Mess- und Witterungsdaten, wie Innen- und AußenTemperatur, Sonneneinstrahlung, Bewölkungszustand, aufgebrachte Heizleistung od. Kühlleistung gebildet werden, kann ein für das Gebäude oder den Gebäudeabschnitt charakteristisches Profil ermittelt werden, das Informationen über die Aufwärm- und Abkühlverläufe bei verschiedenen Umgebungsbedingungen enthält. Dieses Profil wird über die Zeit erfasst und wird vom Steuerungssystem bei der Bestimmung einer Regelungsvorgabe verwendet.

Die Sensorkomponenten 300A-D des erfindungsgemäßen Steuerungssystems, sind geeignet, Energie- bzw. Stromverbrauchsinformationen des Gebäudes G bzw. den einzelnen Gebäudeabschnitten G1, G2, G3 zu erfassen und an die Zentraleinheit 100 zu übermitteln. Die Sensorkomponenten 300A-D können einen intelligenten Stromzähler oder Gaszähler aufweisen oder mit einem intelligenten Strom- oder Gaszähler gekoppelt sein. Alternativ und zusätzlich kann zu den Sensorkomponenten 300A-D eine Schnittstelle zu einem Datenserver UDW eines Energieversorgers (Utility Data Warehouse) vorgesehen sein, welche Verbrauchsinformationen in hinreichender Genauigkeit und Aktualität mitloggt und über eine Datenschnittstelle im Internet bereitstellt.

Aus den Stromverbrauchsinformationen eines Gebäudes G bzw. eines Gebäudeabschnitts G1, G2, G3 kann eine aktuelle Nutzungsweise des Gebäudes G oder Raumes/Gebäudeabschnitts bestimmt werden und für das erfindungsgemäße Steuerungssystem nutzbar gemacht werden. Wenn die Bewohner eines Gebäudes-/Raumes Abends zu Bett gehen, werden in der Regel die Lichter und u.U. der Fernseher ausgestellt. Diese Aktionen sind aus dem Stromverbrauch abzulesen und werden von dem erfindungsgemäßen Steuerungssystem dazu genutzt, eine Temperatur auf der Basis eines solchen Analyseergebnisses auf eine Nachtabsenktemperatur herunter zuregulieren. So werden Verhaltensweisen und Zustände der Gebäudenutzer (z.B. Schlaf, Anwesenheit, Abwesenheit, körperliche Aktivität, Fernsehen, Schreibtischtätigkeit, Kochen) auch aus den Stromverbrauchsdaten (z.B. SmartMeter Daten) abgeleitet.

Die Stromverbrauchsdaten werden von der Zentraleinheit 100 so ausgewertet, dass daraus gewisse Nutzerzustände abgeleitet werden können. Beispielsweise wäre zu nennen, dass ein Stromverbrauchsverlauf bestimmte Charakteristika aufweist, wenn Personen eines Haushalts abends zu Bett gehen, da dann Lichter und Unterhaltungselektronik ausgeschaltet werden. Umgekehrtes gilt wenn die Personen morgens aufstehen. Auch kann die grundsätzliche Anwesenheit von Personen mit einer gewissen Wahrscheinlichkeit aus solchen Charakteristika ermittelt werden, da ein Gebäudenutzer während einer Anwesenheit im Gebäude mit großer Wahrscheinlichkeit elektrische Geräte verwendet.

Aus der **Fig. 2** ist auch ersichtlich, wie eine durch das erfindungsgemäße Steuerungssystem eine Einzelraumregelung bzw. eine Gebäudeabschnitt-Regelung realisiert werden kann. Dies kann erforderlich sein, wenn zum Beispiel keine verteilte Schnittstelleneinheit 210A mit der zentralen Energiewandlungseinrichtung H gekoppelt werden kann oder ein höherer raumspezifischer Temperaturkomfort gewünscht ist. Die Einheiten 210B-C sind in einer solchen Konfiguration vorzugsweise direkt an die Wärmetauscher W (z.B. Heizkörper/Radiator) in dem Gebäude/Raum angeschlossen und regeln diese individuell. Eine solche Ausführungsform mit mehreren individuell geregelten/gesteuerten Gebäudeabschnitten kann beispielsweise so ausgeführt werden, dass an jedem Heizkörper ein per Stellmotor regelbares Thermostat angeschlossen ist. Wie aus der **Fig. 2** ersichtlich ist, ist auch bei einer Einzelraumregelung eine zusätzliche Kopplung des erfindungsgemäßen Steuerungssystems mit der zentralen Energiewandlungseinrichtung H möglich.

Für gebäudetechnische Komponenten, die mit einem Wärmetauscher W oder dem Rohleitungssystem R in Zusammenhang stehen, sieht eine vorteilhafte Ausführungsform der Stromversorgung vor, eine Übertragung einer geringen Energiemenge kontinuierlich über die Heizungsrohre zu den Teilsystemen zu transportieren. Dort kann diese in einem Energiespeicher zwischengespeichert werden oder direkt verwendet werden. An einer Stelle im Gebäude G ist dazu eine Energie-Einspeisevorrichtung 1W vorzusehen, die selbst an das Stromnetz angeschlossen ist, und eine Energiemenge in Form einer Frequenz in das Rohrleitungssystem einbringt. Das Prinzip der sog. "single wire transmission line", welche die Erforderlichkeit eines "ground" Leiters erübrigt, wurde von Nikola Tesla bereits im 19. Jahrhundert bewiesen. Dafür wird ein hochfrequentes Signal über einen Einzelleiter gesandt, das von einem Verbraucher in elektrische Energie zurück gewandelt wird. Der Vorteil dieser Ausführungsform im Zusammenhang mit dem gebäudetechnischen Steuerungssystem beruht darin, dass keine zusätzlichen elektrischen Leiter zu den einzelnen Heizkörpern verlegt werden müssen, kein Batteriewechsel stattfinden muss und auf teure Energie-Harvester Module verzichtet werden kann. Dies ist insbesondere von Vorteil, wenn wie im Fall von stellmotorbetriebenen Heizkörperthermostaten, gebäudetechnische Komponenten direkt an den Wärmetauschern W, wie etwa einem Heizkörper, angebracht sind.

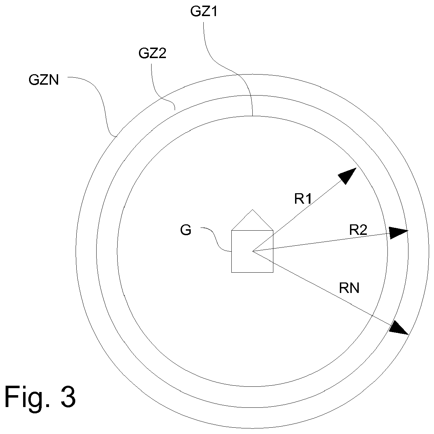

**Fig.3** dient der Veranschaulichung verschiedener Geo-Zonen-Konzepte, wie sie von dem erfindungsgemäßen Steuerungssystem eingesetzt werden können, um eine gebäudetechnische Komponente, wie zum Beispiel ein HVAC-System zielgerichtet zu steuern. In einer einfachsten Ausgestaltung wird eine Geozone G1 um ein Gebäude G definiert, innerhalb der ein Gebäudenutzer von dem erfindungsgemäßen Steuerungssystem als "zuhause" angesehen wird und das System eine für diesen Gebäudenutzerzustand zutreffende Steuerungsvorgabe anwendet. So kann am Beispiel eines HVAC-Systems eine höhere Leistung gefahren werden, wenn der Gebäudenutzer "zuhause" ist und wenn der Gebäudenutzer als "abwesend" gilt, sich also außerhalb der Geozone G1 aufhält, mit einer niedrigeren Leistung gefahren werden.

Gemäß einer weiteren Ausgestaltung können mehrere unterschiedliche Geozonen R₁-R_{N} definiert werden, durch die eine noch abgestimmtere Steuerung einer gebäudetechnischen Komponente ermöglicht wird. Am Beispiel eines HVAC-Systems kann die Leistung des HVAC-Systems durch eine entsprechende Steuerungsvorgabe des Steuerungssystems zum Beispiel kontinuierlich gesteigert werden, wenn sich ein Gebäudenutzer von einer äußeren Geozone R_{N} in eine weiter innen liegenden Geozone R_{N-1} bewegt hat. So ist es auch möglich zu erkennen, ob der Gebäudenutzer sich dem Gebäude nähert oder davon entfernt. Gegebenenfalls kann eine Geozone individuell auf die Nutzer und deren typisches Verhalten eingestellt werden, um eine optimale Steuerung einer gebäudetechnischen Komponente zu erreichen. Vorzugsweise passt das erfindungsgemäße Steuerungssystem die Radien R₁-_{N} basierend auf historischen Erfahrungswerten über das bisherige Leistungsverhalten einer gebäudetechnischen Komponente und einer Rückkehrdauer eines Gebäudenutzers so an, dass eine der gebäudetechnischen Komponente zueigne Trägheit durch rechtzeitiges Anfahren mit einer passende Leistung kompensiert werden kann, und die gebäudetechnische Komponente eine Zielvorgabe erreicht hat, wenn der Gebäudenutzer zuhause eintrifft. Am Beispiel eines HVAC-Systems kann eine solche Zielvorgabe eine Raumtemperatur sein.

### BEZUGSZEICHENLISTE

- 1: Gebäudetechnisches Steuerungssystem
- 100: Zentraleinheit des Steuerungssystems
110 Prozessoreinrichtung
120 Nutzerzustands-Bestimmungseinrichtung
130 Internet-Datenschnittstelle
140 Datenspeichereinrichtung
150 Kommunikationseinrichtung
160 Energieversorgungseinrichtung
170 Anwenderschnittstelle
180 statistische Auswertungseinrichtung
190 Nutzerprofil-Speicher- und Verwaltungseinrichtung
- 200: Gebäudetechnische Komponente des Steuerungssystems
210 Verteilte Schnittstelleneinheit
211 Prozessoreinrichtung
212 Energieversorgungseinrichtung
213 Sensor
214 Kommunikationseinrichtung
215 Anwenderschnittstelle
216 Aktor
220 Gebäudetechnische Funktionseinheit
- 300: Sensorkomponente des Steuerungssystems
310 Verteilte Schnittstelleneinheit
311 Prozessoreinrichtung
312 Energieversorgungseinrichtung
313 Sensor
314 Kommunikationseinrichtung
315 Anwenderschnittstelle
- 200A-D: Gebäudetechnische Komponenten des Steuerungssystems
210A-D Verteilte Schnittstelleneinheiten des Steuerungssystems
- 300A-D: Sensorkomponenten des Steuerungssystems
- 400: Gateway Komponente des Steuerungssystems
- G: Gebäude
- G1-3: Gebäudeabschnitte
- H: Zentrale Energiewandlungseinrichtung des HVAC Systems im Gebäude
- W: Dezentraler Wärmetauscher des HVAC Systems
- E: Energiespeichereinrichtung
- R: Wärmetransport-Rohrleitung für das HVAC-System
- M: Mobilfunkgerät eines Gebäudenutzers
- IED: Internetfähiges Gerät
- UDW: Energieversorger-Datenbank (Utility-Data-Warehouse)
- GDA: Geodatenübermittlung
- DA: Datenverbindung / -austausch
- MK: Mobilfunknetz-Kernsystem
- T: Herkömmliche (ursprüngliche installierte) Steuer-/Regeleinheit bzw. Thermostat
- 1W: "1-wire" Energie-Einspeiseeinrichtung
- GZ_{1-N}: Geozonen um ein Gebäude
- R_{1-N}: Radien der Geozonen um ein Gebäude

## Patentansprüche

1. Gebäudetechnisches Steuerungssystem mit
mindestens einer Schnittstelleneinheit (210, 310) zur funktionsmäßigen Kopplung mit einer gebäudetechnischen Funktionseinheit (220); und
einer Nutzerzustands-Bestimmungseinrichtung (120), die ausgebildet ist, einen gegenwärtigen Gebäudenutzerzustand zu bestimmen, wobei auf der Basis des bestimmten Gebäudenutzerzustands eine daraufhin abgestimmte Steuerungsvorgabe für die gebäudetechnische Funktionseinheit (220) ermittelt und zur Steuerung des Betriebs der gebäudetechnischen Funktionseinheit (220) verwendet wird,
**dadurch gekennzeichnet,**
**dass** die Nutzerzustands-Bestimmungseinrichtung (120) eine Stromverbrauchserfassungseinrichtung umfasst, die mit einem intelligenten Stromzähler koppelbar oder zum Empfang von Stromverbrauchsdaten über eine Internetschnittstelle eingerichtet ist, und
**dass** die Stromverbrauchserfassungseinrichtung dazu eingerichtet ist,
- aus bestimmten Charakteristika im Verlauf des zentralen Stromverbrauchs eines Gebäudes oder Gebäudeabschnitts den gegenwärtigen Gebäudenutzerzustand abzuleiten und
- aus dem Verlauf des zentralen Stromverbrauchs zwischen verschiedenen elektrischen Geräten zu unterscheiden, nämlich zumindest einen Fernseher von einer Waschmaschine oder einem Kühlschrank zu unterscheiden, und einen gegenwärtigen Gebäudenutzerzustand "Schlaf" auch daraus abzuleiten, wenn der Stromverbrauch geringer als ein charakteristischer Wert ist oder aus dem Stromverbrauch ein Fernseher als ausgestellt erkannt wird.

2. Gebäudetechnisches Steuerungssystem nach Anspruch 1, bei dem die Nutzerzustands-Bestimmungseinrichtung (120) weiterhin mindestens eine oder mehrere der folgenden Einrichtungen umfasst: eine Gebäudenutzer-Geodatenerfassungseinrichtung, eine Gerätverwendungserfassungseinrichtung und/oder eine Funkfrequenzüberwachungseinrichtung.

3. Gebäudetechnisches Steuerungssystem nach Anspruch 2, das weiterhin eine statistische Auswertungseinrichtung (180) und/oder eine Nutzerprofil-Speicher- und Verwaltungseinrichtung (190) umfasst, die aus einem in der Vergangenheit durch die Nutzerzustands-Bestimmungseinrichtung (120) bestimmten Gebäudenutzerzustand ein für den Gebäudenutzer typisches Nutzerverhaltensprofil ableiten, das ausschließlich oder in Abstimmung mit einem gegenwärtigen durch die Nutzerzustands-Bestimmungseinrichtung (120) bestimmten Nutzerzustand zur Steuerung des Betriebs der gebäudetechnischen Funktionseinheit verwendet wird.

4. Gebäudetechnisches Steuerungssystem nach Anspruch 2, bei dem die Gebäudenutzer-Geodatenerfassungseinrichtung der Nutzerzustands-Bestimmungseinrichtung (120) ausgebildet ist, durch Vergleich eines Geopositionsdatensatzes des Gebäudes (G) und eines Geopositionsdatensatzes eines Gebäudenutzers zu bestimmen, ob der Gebäudenutzer innerhalb einer um das Gebäude definierten Geozone (GZ) befindet oder nicht.

5. Gebäudetechnisches Steuerungssystem nach Anspruch 2, bei dem die Gerätverwendungserfassungseinrichtung der Nutzerzustands-Bestimmungseinrichtung (120) ausgebildet ist, durch Kopplung mit einer Software-Anwendung auf einem Computer des Gebäudenutzers zu bestimmen, ob der Computer verwendet wird.

6. Gebäudetechnisches Steuerungssystem nach Anspruch 2, bei dem die Funkfrequenzüberwachungseinrichtung der Nutzerzustands-Bestimmungseinrichtung (120) ausgebildet ist, die Anwesenheit eines Gebäudenutzers im Gebäude anhand einer Überwachung von Funkfrequenzbändern auf bestimmte Charakteristiken zu bestimmen, wobei die Charakteristiken typische Abstrahlcharakteristiken eines tragbaren Mobilfunkgerätes, eines WLAN/WiFi-Moduls und/oder eines Bluetooth-Moduls sind.

7. Gebäudetechnisches Steuerungssystem nach Anspruch 1, bei dem die Stromverbrauchserfassungseinrichtung der Nutzerzustands-Bestimmungseinrichtung (120) ausgebildet ist, aus dem gemessenen Stromverbrauch zu bestimmen, welche elektrischen Verbraucher im Gebäude bzw. von dem Gebäudenutzer verwendet werden, und aus den verwendeten elektrischen Verbrauchern auf den gegenwärtigen Gebäudenutzerzustand zu schließen.

8. Gebäudetechnisches Steuerungssystem nach einem der vorhergehenden Ansprüche, bei dem die gebäudetechnische Funktionseinheit eine energieerzeugende Anlage und/oder eine Energiespeichereinheit ist.

9. Verfahren zur Steuerung einer gebäudetechnischen Funktionseinheit mittels eines gebäudetechnischen Steuerungssystems nach Anspruch 1, mit:
Bestimmen eines gegenwärtigen Gebäudenutzerzustands; und
Verwenden des bestimmten Gebäudenutzerzustands zur Bestimmung einer Steuerungsvorgabe für eine gebäudetechnische Funktionseinheit.

10. Verfahren nach Anspruch 9, bei dem das Bestimmen eines gegenwärtigen Gebäudenutzerzustandes, das Bestimmen eines gegenwärtig im Gebäude betriebenen elektrischen Verbrauchers anhand des im Gebäude gemessenen Stromverbrauchs umfasst, wobei aus dem betriebenen elektrischen Verbraucher ein Gebäudenutzerzustand bestimmt wird.

## Claims

1. A building technology control system comprising:
at least one interface unit (210, 310) configured to functionally couple to a building technology functional unit (220); and
a user status determination device (120) designed to determine a current building user status, wherein, based on the determined building user status, a control specification for the building technology functional unit (220) can be determined and used for controlling operation of the building technology functional unit (220),
**characterized in that**
the user status determination device (120) comprises a power consumption determination device configured to be coupled with an intelligent electricity meter or to receive power consumption data through an internet interface, and
the power consumption determination device is configured to derive the current building user status from specific characteristics in the course of the central power consumption, and to distinguish different electric devices from the course of the central power consumption, namely to distinguish at least a television from a washing machine or a fridge, and derive a current user status "sleep" also based in dependence of whether the power consumption is lower than a characteristic value or if, based on the power consumption, a television is determined to be turned off.

2. The building technology control system according to claim 1, in which the user status determination device (120) comprises one or more of:
a building user geodata sensing device;
an appliance usage sensing device; and/or
a radio frequency monitoring device.

3. The building technology control system according to claim 2, further comprising a statistical evaluation device (180) and/or a user profile storage and management device (190) which, from a previously determined building user status determined by the user status determination device (120), derive a user behavior profile which is typical for a corresponding building user and which is used exclusively or in co-ordination with a currently determined building user status, determined by the user status determination device (120), for controlling the operation of the building technology functional unit.

4. The building technology control system according to claim 2, in which the building user geodata sensing device of the user status determination device (120) is designed to determine, by comparison of a geo position data set of a corresponding building (G) and a geo position data set of a corresponding building user, whether or not the building user is located within a defined geozone (GZ) around the building.

5. The building technology control system according to claim 2, in which the appliance usage sensing device of the user status determination device (120) is designed to determine, by coupling to a software application on a computer of a corresponding building user, whether the computer is being used.

6. The building technology control system as claimed in claim 2, wherein the radio frequency monitoring device of the user status determination device (120) is designed to determine the presence of a corresponding building user in the building by monitoring radio frequency bands for specific characteristics that are typical emission characteristics of a portable mobile communication device, a WLAN/WiFi module, and/or a Bluetooth module.

7. The building technology control system as claimed in claim 1, wherein the power consumption sensing device of the user status determination device (120) is designed to:
determine from the measured current consumption which electrical consumer units are being used in the building or by the building user, and
draw a conclusion as to the current building user status from the electrical consumer units determined as being used.

8. The building technology control system as claimed in any one of the preceding claims, wherein the building technology functional unit is an energy-generating system and/or an energy storage unit.

9. A method for controlling a building technology functional unit by a building technology control system according to claim 1, the method comprising:
determining a current building user status; and
using the determined building user status to determine a control specification for a building technology functional unit.

10. The method according to claim 9, wherein the step of determining a current building user status comprises the determination of an electrical consumer unit currently being operated in the building by means of the power consumption measured in the building, wherein the building user status is determined from the electrical consumer unit being operated.

## Revendications

1. Un système de contrôle de technique du bâtiment comprenant :
au moins une unité d'interface (210, 310) pour le couplage de manière fonctionnelle avec une unité fonctionnelle de technique du bâtiment (220), et
un dispositif de détermination de statut d'utilisateur (120) conçu pour déterminer un statut d'utilisateur du bâtiment actuel, tandis que, sur la base du statut d'utilisateur du bâtiment déterminé, une spécification de contrôle pour l'unité fonctionnelle de technique du bâtiment (220) peut être déterminée et utilisée pour contrôler le fonctionnement de l'unité fonctionnelle de technique du bâtiment (220),
**caractérisé en ce que**
le dispositif de détermination de statut d'utilisateur (120) comprend un dispositif de détermination de consommation d'électricité configuré pour être couplé avec un compteur d'électricité intelligent ou pour recevoir des données relatives à la consommation d'énergie par le biais d'une interface internet, et
le dispositif de détermination de consommation d'électricité est configuré pour déduire la consommation d'électricité centrale le statut d'utilisateur du bâtiment actuel de caractéristiques spécifiques au cours de la cet d'un bâtiment ou d'une partie de bâtiment et pour distinguer entre différents dispositifs électriques du cours de la consommation d'électricité centrale, à savoir pour distinguer au moins une télévision d'une machine à laver ou d'un réfrigérateur, et pour déduire un statut d'utilisateur du bâtiment "veille" actuel également lorsque la consommation d'électricité est inférieure à une valeur caractéristique ou lorsque, sur la base de la consommation d'électricité, une télévision est reconnue comme éteinte.

2. Le système de contrôle de technique du bâtiment selon la revendication 1 pour lequel le dispositif de détermination de statut d'utilisateur (120) comprend au moins un ou plusieurs des dispositifs suivants :
un dispositif de collecte de données géographiques d'utilisateur du bâtiment,
un dispositif de détection d'utilisation d'appareil, et/ou
un appareil de surveillance de la fréquence radio.

3. Le système de contrôle de technique du bâtiment selon la revendication 2 comprenant également un dispositif d'évaluation statistique (180) et/ou un dispositif de gestion et de stockage de profil d'utilisateur (190), lesquels déduisent, à partir d'un statut d'utilisateur de bâtiment déterminé auparavant par le dispositif de détermination de statut d'utilisateur (120), un profil de comportement d'utilisateur typique d'un utilisateur de bâtiment, lequel est utilisé exclusivement ou en coordination avec un statut d'utilisateur de bâtiment déterminé actuellement, pour contrôler le fonctionnement de l'unité fonctionnelle de technique du bâtiment.

4. Le système de contrôle de technique du bâtiment selon la revendication 2, pour lequel le dispositif de collecte de données géographiques d'utilisateur du bâtiment du dispositif de détermination de statut d'utilisateur (120) est conçu pour déterminer, par comparaison d'un ensemble de données de position géographique (G) du bâtiment correspondant et d'un ensemble de données de position géographique d'un utilisateur de bâtiment, si l'utilisateur de bâtiment se trouve ou non dans une zone géographique (GZ) définie autour du bâtiment.

5. Le système de contrôle de technique du bâtiment selon la revendication 2, pour lequel le dispositif de détection d'utilisation d'appareil du dispositif de détermination de statut d'utilisateur (120) est conçu pour déterminer, par le biais du couplage avec une application de logiciel sur un ordinateur de l'utilisateur de bâtiment, si l'ordinateur est utilisé.

6. Le système de contrôle de technique du bâtiment selon la revendication 2, pour lequel le dispositif de surveillance de la fréquence radio du dispositif de détermination de statut d'utilisateur (120) est conçu pour déterminer la présence d'un utilisateur de bâtiment dans le bâtiment par le biais de la surveillance des bandes de fréquence radio pour rechercher des caractéristiques spécifiques, lesquelles sont des caractéristiques d'émission typiques d'un appareil de communication mobile et portable, d'un module WLAN/WiFi et/ou d'un module Bluetooth.

7. Le système de contrôle de technique du bâtiment selon la revendication 1, pour lequel le dispositif de détection de consommation d'électricité du dispositif de détermination de statut d'utilisateur (120) est conçu pour :
déterminer, à partir de la consommation d'électricité mesurée, quelles unités de consommateurs électriques sont utilisées dans le bâtiment ou par l'utilisateur du bâtiment, et
tirer une conclusion concernant le statut d'utilisateur du bâtiment actuel à partir des unités de consommateurs électriques déterminés comme étant utilisés.

8. Le système de contrôle de technique du bâtiment selon une des revendications précédentes, pour lequel l'unité fonctionnelle de technique du bâtiment est un système générant de l'énergie et/ou une unité de stockage d'énergie.

9. Un procédé pour contrôler une unité fonctionnelle de technique du bâtiment par le biais d'un système de contrôle de technique de bâtiment selon la revendication 1, le procédé comprenant :
la détermination d'un statut d'utilisateur de bâtiment actuel, et
l'utilisation du statut d'utilisateur de bâtiment déterminé pour déterminer une directive de contrôle pour une unité fonctionnelle de technique de bâtiment.

10. Le procédé selon la revendication 9, pour lequel l'étape de la détermination d'un statut d'utilisateur de bâtiment actuel comprend l'étape de la détermination d'une unité de consommateur électrique actuellement mise en fonctionnement dans le bâtiment sur la base de la consommation d'électricité mesurée dans le bâtiment, tandis qu'un statut d'utilisateur de bâtiment est déterminé à partir de l'unité de consommateur électrique mise en fonctionnement.
